# DEMANDE DE BREVET EUROPEEN

(11) **EP 2 085 278 A1**
(43) Date de publication de la demande: **05.08.2009**
(21) Numéro de dépôt: 09151347.3
(22) Date de dépôt: 26.01.2009
(51) Int. Cl.: B60T 17/22, B60T 13/565

(54) **Maître-cylindre pour servomoteur d'assistance pneumatique au freinage et servomoteur d'assistance pneumatique au freinage muni d'un tel maître-cylindre**

(30) Priorité: 30.01.2008 FR 0800539
(71) Demandeur: Robert Bosch GmbH, 70442 Stuttgart (DE)
(72) Inventeur: Anderson, Chris, 75002 Paris (FR); Attard, Jean-Marc, 60340 Villers sous St Leu (FR); Sprocq, Raynald, 77450 Esbly (FR)
(74) Mandataire: Hurwic, Aleksander Wiktor

(57) **Abrégé**

La présente invention se rapporte à un maître-cylindre pour un servomoteur d'assistance pneumatique au freinage et à un servomoteur d'assistance pneumatique au freinage muni d'un tel maître-cylindre.

L'invention a principalement pour objet un maître-cylindre comportant un corps muni d'un alésage et un piston primaire monté à coulissement étanche dans l'alésage le piston primaire étant apte à être déplacé par un piston d'assistance d'un servomoteur en fonctionnement normal, **caractérisé en ce que** ledit piston primaire comporte des moyens pour modifier la section transversale de travail dudit piston primaire en cas d'assistance dégradée.

L'invention s'applique principalement aux systèmes de freinage pour véhicules automobiles.

## Description

La présente invention se rapporte à un maître-cylindre pour un servomoteur d'assistance pneumatique au freinage et à un servomoteur d'assistance pneumatique au freinage muni d'un tel maître-cylindre.

Il est connu qu'un système de freinage pour véhicule peut comprendre une pédale de frein sur laquelle le conducteur du véhicule appuie pour freiner ce dernier.

La force d'appui sur la pédale est transmise à un servomoteur, via une tige de commande, qui amplifie cette force et transmet la force amplifiée, via une tige de poussée et un piston primaire, par une augmentation de la pression d'un liquide de frein incompressible d'un maître-cylindre.

Finalement, ce liquide incompressible transmet à son tour cette force amplifiée à un système de freinage, par exemple à disques.

Il apparaît ainsi que les différents éléments du système de freinage décrit ci-dessus - pédale, tige de commande, piston primaire - forment un ensemble solidaire de telle sorte que l'intensité du freinage obtenue est directement reliée à l'intensité de l'appui du conducteur sur la pédale.

La présente invention résulte de la constatation qu'une telle relation provoque une contradiction pratique entre, d'une part, des exigences législatives auxquelles est soumis le système de freinage et, d'autre part, des performances satisfaisantes requises pour le système de freinage comme détaillée ci-dessous.
- Les exigences législatives visent à permettre le freinage d'un véhicule en cas de défaillance du servomoteur de ce véhicule.

Pour cela, ces exigences législatives imposent que l'effort F exercé par un conducteur sur sa pédale puisse générer une pression P de freinage dans le maître-cylindre suffisante pour freiner, selon certains critères de décélération, le véhicule en l'absence de l'assistance du servomoteur.

Dès lors, il apparaît optimal et opportun d'utiliser un piston de faible section dans le maître-cylindre puisque la résistance de la pédale, due à la pression P du liquide de frein, pour une même force F de freinage, est d'autant plus faible que cette section S du piston en contact avec le liquide est petite (S.P = F).

Par la suite, cette section S du piston apte à modifier la pression du liquide de frein est dénommée section de travail du piston.
- Les performances satisfaisantes pour le système de freinage prennent en compte le fait que la course de la pédale de frein est d'autant plus courte, lors d'un freinage, que le volume de liquide déplacé par cette course est important.

Dès lors, les constructeurs de systèmes de freinage et de véhicules souhaitent pouvoir utiliser un piston primaire de section S de travail importante, déplaçant une quantité de liquide de frein élevée, afin de réduire la course de la pédale.

La présente invention vise à proposer un système de freinage répondant aux exigences législatives tout en présentant des performances satisfaisantes.

C'est pourquoi, elle concerne un maître-cylindre comportant un corps muni d'un alésage, un piston primaire monté à coulissement étanche dans l'alésage, ce piston primaire étant apte à être déplacé par un piston d'assistance d'un servomoteur en fonctionnement normal caractérisé en ce que ledit piston primaire comporte des moyens pour diminuer la section de travail dudit piston primaire en cas d'assistance dégradée.

Grâce à un tel système de freinage, il est possible de satisfaire les exigences législatives et les performances requises.

En effet, un système de freinage selon l'invention utilise un piston ayant une section de travail importante lorsque le servomoteur fonctionne correctement, ce qui permet de limiter la course de la pédale de frein et d'offrir ainsi des performances satisfaisantes.

Par ailleurs, lorsque le servomoteur présente une défaillance et son assistance au freinage est dégradée, la section de travail dudit piston primaire est diminuée de telle sorte que le conducteur peut exercer une force suffisante sur le liquide de frein via le piston primaire pour effectuer un freinage du véhicule.

D'autres caractéristiques et avantages de l'invention apparaîtront avec la description d'un mode de réalisation de l'invention effectuée ci-dessous, à titre illustratif et non limitatif, en référence aux figures ci-jointes :
- la figure 1a est une vue en coupe d'un système de freinage selon l'invention,
- les figures 1b, 1c et 1d sont des représentations détaillées, à trois dimensions, d'un mode de réalisation de l'invention, et
- les figures 2a à 2e sont des schémas fonctionnels de fonctionnement des joints mis en oeuvre dans une réalisation de l'invention.

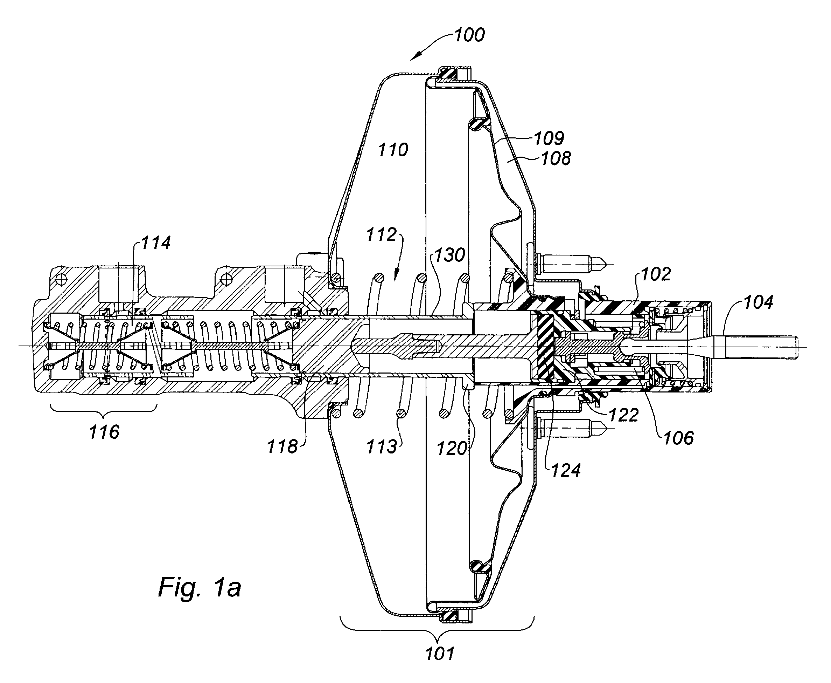

Sur la figure 1a est représenté un système 100 de freinage conforme à l'invention. Ainsi, ce système comprend un corps 102 de piston dans lequel coulisse la tige 104 de commande activée par une pédale (non représentée) de frein.

Le déplacement de la tige 104 de commande entraîne la compression du ressort 106 d'une valve qui permet l'entrée d'air dans la chambre 108 arrière du servomoteur 101.

Cette entrée d'air entraînant que la chambre 108 arrière soit à une pression supérieure à la pression de la chambre 110 avant, une force proportionnelle à la différence de pression entre les deux chambres s'exerce sur le piston primaire 112 via la jupe 109 séparant les deux chambres 108 et 110.

Finalement, le déplacement de ce piston primaire 112 entraîne une compression du liquide 114 de frein dans le cylindre 116, le ressort 113 de rappel du piston primaire 112 étant comprimé simultanément.

Conformément à l'invention, le piston 112 primaire comprend un premier piston 118 et un second piston 120 dont le déplacement peut dépendre de l'état de fonctionnement du servomoteur.

Plus précisément, le premier piston 118 et le second piston 120 se déplacent lorsque le servomoteur fonctionne correctement tandis que seul le premier piston 118 se déplace lorsque le servomoteur n'effectue pas correctement sa fonction d'assistance au freinage.

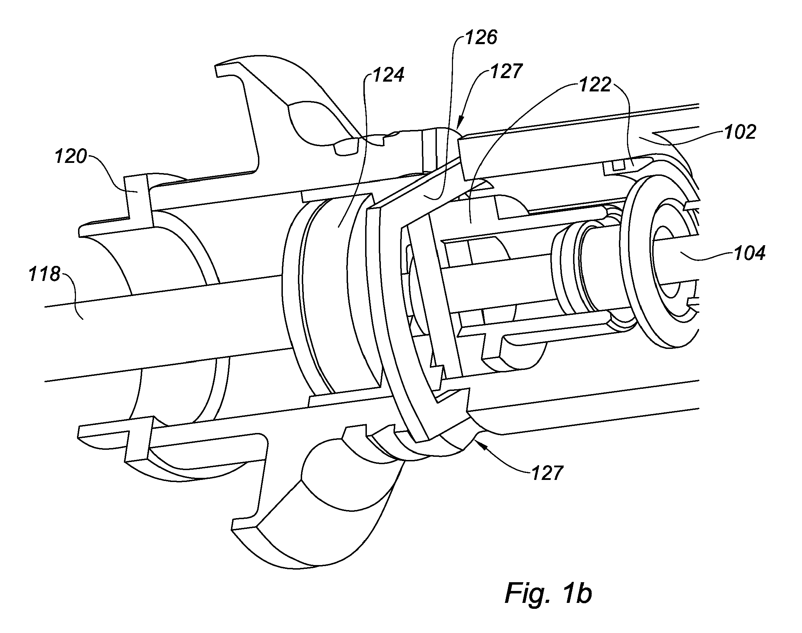

A cet effet, une douille 122 est située en amont du disque 124 de réaction transmettant l'effort de la tige 104 de commande au piston 112 primaire, cette douille étant représentée plus en détail sur les figures 1b à 1d.

Ainsi, la figure 1b représente une vue détaillée à trois dimensions de la douille 122 lorsque cette dernière est en appui sur le corps 102 du piston, le système de freinage étant au repos.

Sur la figure 1b sont également représentés le disque 124 de réaction, la tige 104 de commande, le second piston 120, le premier piston 118 ainsi qu'une première clef 126 et une seconde clef 128 permettant de déplacer soit les deux pistons 118 premier et 120 second, lorsque le servomoteur 101 fonctionne correctement, soit uniquement le premier piston 118 lorsque le servomoteur est défaillant et n'effectue pas d'assistance au freinage.

Dans cette réalisation, les clefs 126 et 128 se présentent sous la forme d'un cadre de forme rectangulaire, présentant des arrondis de façon à optimiser l'appui de chaque clef sur les surfaces correspondantes, et évidée de façon à permettre notamment l'appui de la tige 104 de commande sur le disque de réaction 124.

La première clef 126 est logée dans une fente 127 délimitée, d'une part, par des surfaces d'appui en vis-à-vis du corps 102 du piston et, d'autre part, par le second piston 120 tandis que la seconde clef 128 est logée dans une fente 129 délimitée par des surfaces d'appui en vis-à-vis de la première clef 126 et de la douille 122.

A ce stade, il convient de noter que la douille 122 présente une surface cylindrique en vis-à-vis du second piston 120 lui permettant de coulisser à l'intérieur de ce second piston 120. La douille 122 présente par ailleurs un logement pour le disque de réaction 126 qui est notamment maintenu par les extrémités de la douille utilisées par la seconde clef 128 comme surface d'appui.

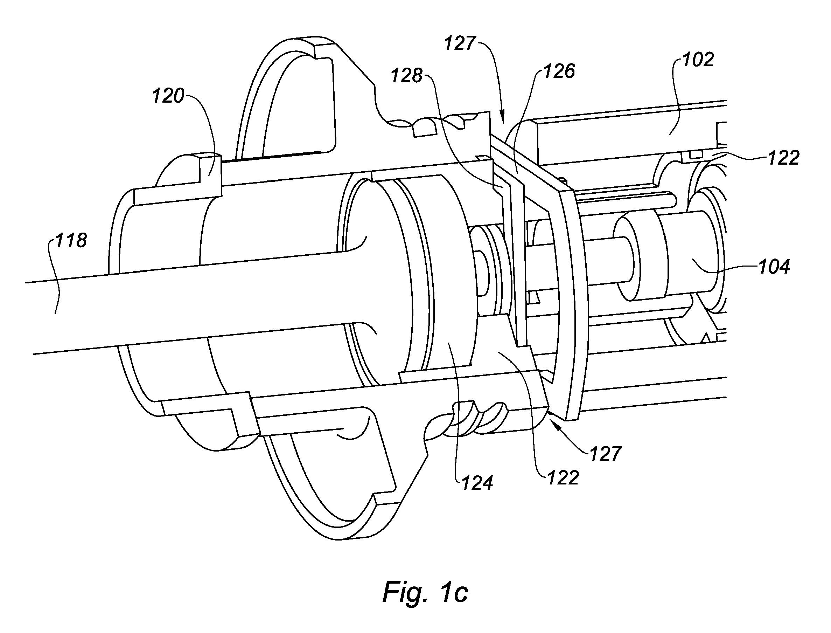

Sur la figure 1c est représentée une seconde vue à trois dimensions des éléments déjà décrits à l'aide de la figure 1b.

Lorsque le servomoteur fonctionne correctement, l'accroissement de la pression dans la chambre arrière 108 (figure 1a) du servomoteur entraîne le déplacement du second piston 120, solidaire de la jupe 109 du servomoteur séparant la chambre arrière 108 de la chambre avant 110, ainsi que celui de l'ensemble douille/disque de réaction/tige de poussée/second piston 118.

Dès lors, la section de travail du piston primaire 112 agissant sur le liquide de frein 114 est celle du premier piston 120 de grand diamètre, ce qui permet de déplacer un volume important de liquide de frein et de satisfaire ainsi à des performances requises.

Lorsque le servomoteur est défaillant, notamment en absence de vide, la jupe 109 ne se déplace pas sous l'action de la tige de commande, ce qui annule tout déplacement du second piston 120.

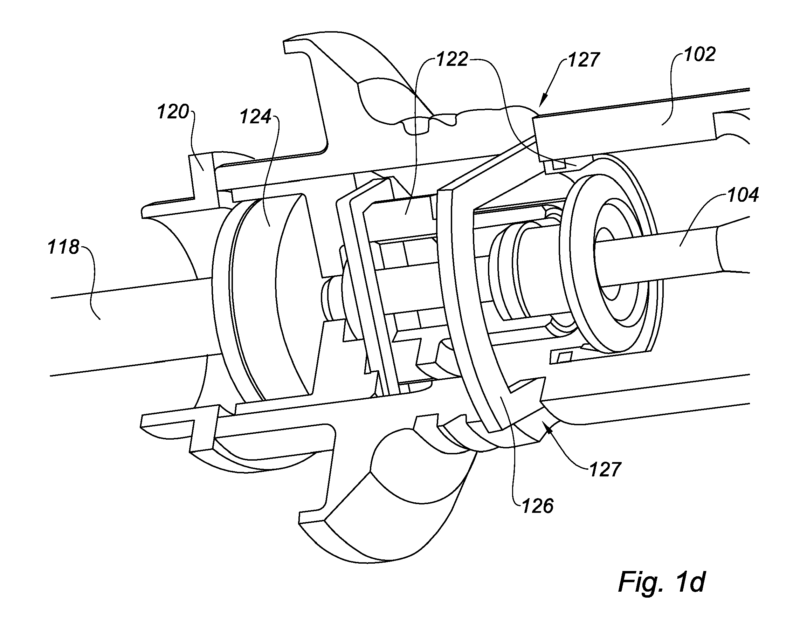

Mais le déplacement de la tige 104 de commande entraîne la compression du ressort 106 (figure 1) de valve jusqu'à une valeur telle que l'action de la tige de commande soit supérieure à la force mise en oeuvre par un ressort 130 de rappel du second piston 120.

Si le déplacement de la tige 104 de commande se poursuit, c'est-à-dire si le conducteur continue à appuyer sur la pédale de frein, le premier piston 118 se déplace en comprimant son ressort 106 de rappel, ce qui permet également le déplacement de l'ensemble douille/disque de réaction.

Dès lors, le diamètre du piston primaire 112 agissant sur le liquide de frein 114 est celui du premier piston 118 de plus faible diamètre, ce qui permet d'obtenir une pression élevée dans le liquide de frein avec une force d'appui sur la pédale satisfaisant les exigences législatives précédemment mentionnées, comme montré sur la figure 1d.

Par ailleurs, un système de freinage conforme à l'invention présente l'avantage de désolidariser la jupe 109 du premier piston 118 lorsque le servomoteur est défaillant. Ainsi, l'appui sur la pédale ne doit pas vaincre la résistance du ressort 113 de rappel du servomoteur lorsque ce dernier est défaillant, ce qui améliore le rendement du rapport entre la force exercée sur la pédale et l'augmentation de la pression dans le liquide de frein.

Un tel système présente également l'avantage de permettre l'utilisation d'un piston secondaire dans le maître-cylindre 116 de section élevée.

A volume de liquide de frein constant, une telle section élevée permet donc de diminuer la course de ce piston secondaire, ce qui réduit la course du piston secondaire et l'encombrement du maître-cylindre.

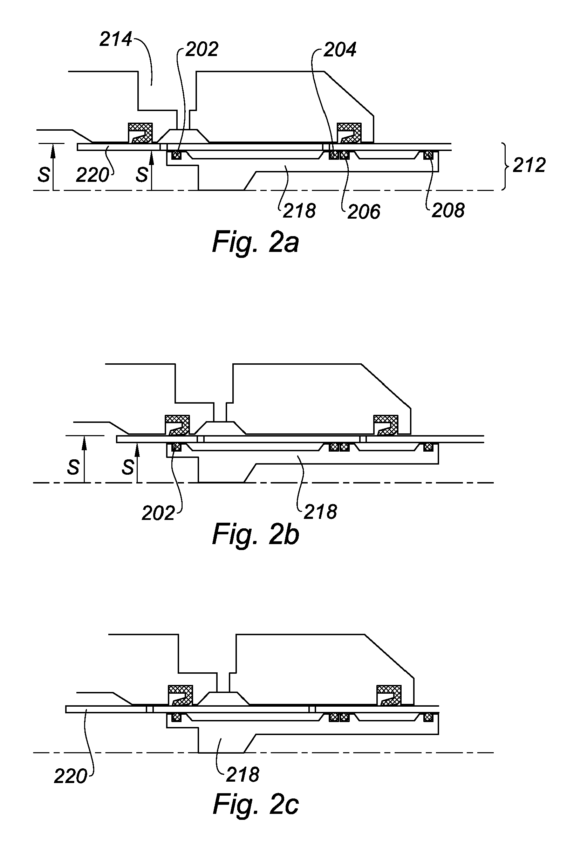

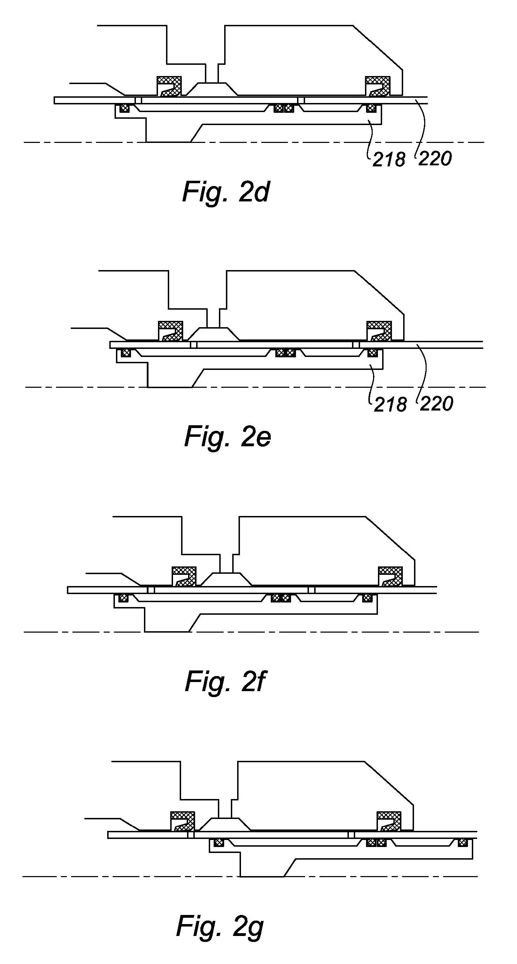

Finalement, il convient de noter que l'utilisation de sous-pistons entraîne la présence de joints d'étanchéité entre ces sous-pistons comme décrit ci-dessous à l'aide des figures 2a à 2f.

Sur la figure 2a est représentée de façon schématique un piston primaire 212 en coupe, ce piston 212 comportant conformément à l'invention un premier piston 218 de section S inférieure à la section S' du second piston 220 associé coaxialement au premier piston 218 pour former la tige primaire.

Des joints J202, J204, J206 et J208 sont également représentés, ces joints visant respectivement à maintenir la pression dans la chambre primaire en l'absence ou en présence d'une défaillance du servomoteur, pour doubler la fonction d'étanchéité de manière à rendre acceptable le risque statistique d'une perte d'étanchéité ou pour éviter une fuite par gravité du réservoir de liquide 214 de freinage vers le servomoteur lors de la défaillance du servomoteur ou lors de la purge de la pédale sans vide comme décrit en détail ci-dessous.

### Joint J202 :

En situation de freinage normal (figure 2b), le joint 202 maintient la pression dans la chambre primaire en évitant toute fuite de liquide.

### Joint J204 :

En situation de freinage avec une défaillance du servomoteur, le déplacement du premier piston 218 par rapport au second piston 220 entraîne que le joint 202 précède un évidement « Trou 1 » classiquement présent sur le second piston 220 (figure 2c).

Dès lors, une fuite du liquide présent dans le maître-cylindre peut s'effectuer par cet évidement de telle sorte que le joint J202 n'est plus en mesure de maintenir la pression dans la chambre primaire. C'est pourquoi, un joint J204 est prévu de façon à éviter toute fuite de liquide dans cette situation.

### Evidement « Trou 2 » et joint J206 :

L'utilisation du joint J204 ne permet pas la détection, en freinage normal, d'une éventuelle défaillance du joint J202 puisque le joint J204 se substituerait au joint J202 pour maintenir la pression dans la chambre primaire.

Or l'intégrité du joint J202 est indispensable pour la situation perte de vide en position « repos » (figure 2b) car, si dans cette position « repos » le joint J202 s'avérait être défaillant, il pourrait en résulter une fuite du liquide de frein vers le réservoir via l'évidement « trou 1 », entraînant une perte totale de freinage.

Il est donc nécessaire de prendre en compte un second évidement « trou 2 » afin que l'éventuelle défaillance du joint J202 se traduise par une fuite vers le réservoir en freinage normal, prévenant ainsi le conducteur de l'anomalie par un rallongement de la course pédale.

Par ailleurs, afin que l'évidement « trou 2 » ne puisse pas entraîner de fuites transitoires vers le réservoir, il est nécessaire de caler sa position par rapport au joint J204 à une distance inférieure ou égale à la distance entre l'évidement « trou 1 » et le joint J202 (D2 doit être inférieur ou égal à D1).

Ainsi, les déplacements du premier piston 118 par rapport au second piston 220 entraîne la protection de l'évidement « trou 2 » par le joint 204 avant que l'évidement « trou 1 » cesse d'être isolé du liquide de frein par le joint J202.

En outre, une éventuelle défaillance du joint J204 doit être considéré, par exemple dans le cadre d'une situation perte de vide pendant un freinage: si dans cette situation le joint J204 s'avérait être défaillant, il pourrait en résulter une fuite vers le réservoir à travers l'évidement « trou 2 » et une perte totale de freinage.

Il est donc nécessaire de rajouter le joint J206 afin de doubler la fonction d'étanchéité de manière à ce que la probabilité statistique pour que les deux joints soient défaillants apparaisse comme suffisamment faible et acceptable.

A ce stade, il convient de noter que, pour remplir la condition décrite dans le paragraphe précédent concernant la séquence de recouvrement/découvrement des évidements « trous 1 » et « trou 2 » par les joints J202 et J204 respectivement lors du déplacement du piston 118 par rapport au piston 220, il devient nécessaire de remplir la condition D2'<=D1, bien que cette condition ne soit pas remplie dans les figures illustratives.

### Joint J208 :

Ce joint est mis en oeuvre pour éviter des fuites de liquide par gravité à travers l'évidement « trou 2 » du réservoir par l'extérieur.

Finalement, il convient de noter que la présence du ressort de rappel 106 permet d'effectuer un freinage ne mettant en oeuvre que le premier piston 218 lorsque l'appui sur la pédale est effectué rapidement.

## Revendications

1. Maître-cylindre comportant un corps muni d'un alésage et un piston primaire monté à coulissement étanche dans l'alésage le piston primaire étant apte à être déplacé par un piston d'assistance d'un servomoteur en fonctionnement normal, **caractérisé en ce que** ledit piston primaire comporte des moyens pour modifier la section transversale de travail dudit piston primaire en cas d'assistance dégradée.

2. Maître-cylindre selon la revendication 1 **caractérisé en ce que** lesdits moyens comprennent un premier piston (118, 218) et un deuxième piston (120, 220) coaxiaux de section de travail distinctes, le premier piston comprenant des moyens pour coulisser de façon indépendante vis-à-vis du second piston en cas d'assistance dégradée.

3. Maître-cylindre selon la revendication 1 ou 2 **caractérisé en ce que** second piston est destiné à être solidaire d'un piston pneumatique de servomoteur tandis que le premier piston est destiné à être en appui contre le piston pneumatique par l'intermédiaire d'une douille permettant les déplacements du premier piston indépendamment du piston pneumatique du servomoteur.

4. Maître-cylindre selon la revendication 1, 2 ou 3 **caractérisé en ce que** la douille permet les déplacements du premier piston indépendamment du piston pneumatique du servomoteur au moyen d'une première clef en contact avec le piston pneumatique et la douille.

5. Maître-cylindre selon la revendication 1, 2 ou 3 **caractérisé en ce qu'**il comprend une seconde clef comprise entre la première clef et la douille.

6. Maître-cylindre selon l'une des revendications précédentes **caractérisé en ce qu'**il comprend des joints entre le premier piston et le deuxième piston.

7. Maître-cylindre selon la revendication 6 **caractérisé en ce que** les joints entre le premier piston et le second piston préviennent des fuites de liquide de frein en l'absence ou en présence d'une défaillance du servomoteur, doublent la fonction d'étanchéité de manière à rendre acceptable le risque statistique d'une perte d'étanchéité et/ou évitent une fuite de liquide de freinage vers le servomoteur.

8. Maître-cylindre selon l'une des revendications précédentes **caractérisé en ce qu'**il comprend un évidement entre le deuxième piston et le premier piston de façon à permettre la détection d'une fuite de liquide due à une défaillance d'un joint.

9. Servomoteur hydraulique de véhicule muni d'un maître-cylindre comportant un corps muni d'un alésage et un piston primaire monté à coulissement étanche dans l'alésage le piston primaire étant apte à être déplacé par un piston d'assistance d'un servomoteur en fonctionnement normal, **caractérisé en ce que** ledit piston primaire comporte des moyens pour modifier la section transversale de travail dudit piston primaire en cas d'assistance dégradée selon l'une des revendications précédentes.
